# EUROPEAN PATENT APPLICATION

(11) **EP 3 481 033 A1**
(43) Date of publication of application: **08.05.2019**
(21) Application number: 17819141.7
(22) Date of filing: 21.06.2017
(51) Int. Cl.: H04L 29/08

(54) **BASE STATION, AND METHOD, APPARATUS AND SYSTEM FOR RESPONDING TO ACCESS REQUEST**

(30) Priority: 30.06.2016 CN 201610506689
(71) Applicant: ZTE Corporation, Shenzhen, Guangdong 518057 (CN)
(72) Inventor: LI, Rui, Shenzhen Guangdong 518057 (CN); JI, Jiatong, Shenzhen Guangdong 518057 (CN); YANG, Zhiqi, Shenzhen Guangdong 518057 (CN); LIU, Jianbo, Shenzhen Guangdong 518057 (CN)
(74) Representative: Deambrogi, Edgardo
(86) International application number: PCT/CN2017/089287
(87) International publication number: WO 2018/001144

(57) **Abstract**

Provided are a base station, and a method, apparatus and system for responding to an access request. The method includes: acquiring an access request for requesting access to a target application server, the access request carrying identification information of the target application server; determining, according to the identification information of the target application server, whether there is a locally set application proxy for the target application server; and in a case of determining that there is the locally set application proxy for the target application server, responding to the access request by means of the application proxy of the target application server. The solution solves the technical problem in the related art of weak bearing capability of a base station, thereby achieving the effect of improving the bearing capability of the base station.

## Description

### Technical Field

The present disclosure relates to the field of communications, and more particularly to a base station, and a method, apparatus and system for responding to an access request.

### Background

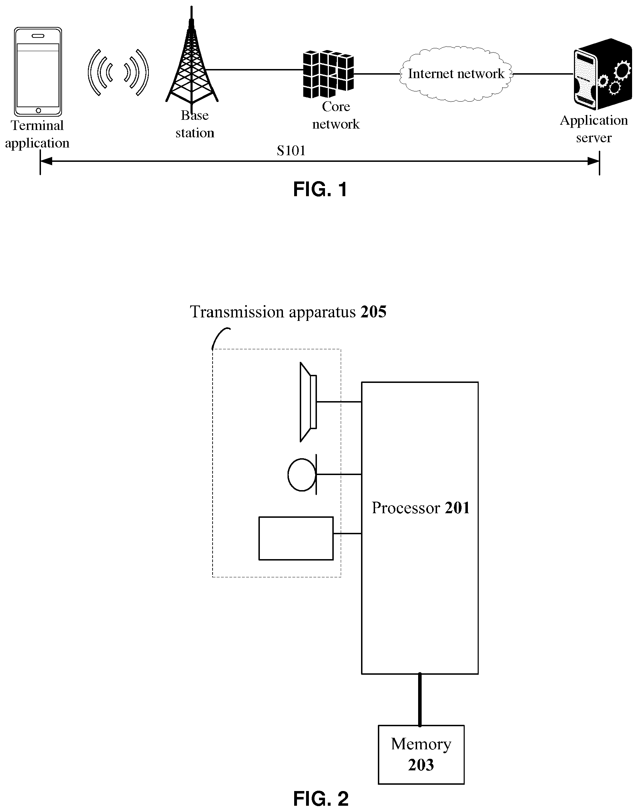

In the existing wireless communication system (as shown in FIG. 1), due to the limitation of the architecture design of a Radio Access Network (RAN), the entire network serves only as a pure data forwarding node, and an operator cannot extract and utilize valuable information from a currently operational pipeline, cannot effectively cope with the ever-increasing data and signaling traffic, that is, facing the problem of dumb pipelines, cannot sense the service types of different users in a channel, and performs the same processing on data in all pipelines without providing corresponding services for specific users and specific services such as shorter delays and higher bandwidth. This has led to be out of proportion between an increase in the amount of data traffic and an income increase in the era of mobile Internet, where operators are faced with Over The Top (OTT, that is, various application services are provided for users through the Internet) in traditional services such as voice and text messaging. Because a traffic pipeline on a current base station side has a single function and weaker bearer capability, an operator wants to change the pure traffic pipeline into an intelligent pipeline with service capability, and transforms a network edge node at the beginning of the pipeline from a single access function to an edge intelligent node with a service processing capability, thereby improving the carrying capacity of wireless networks in response to Internet and government and enterprise applications.

In view of the technical problem in the related art of weak bearing capability of a base station, an effective solution has not been proposed yet.

### Summary

The embodiments of the present disclosure provide a base station, and a method, apparatus and system for responding to an access request, which may at least solve the technical problem in the related art of weak bearing capability of a base station.

According to an embodiment of the present disclosure, a method for responding to an access request is provided. The method may include that: an access request for requesting access to a target application server is acquired, the access request carrying identification information of the target application server; whether there is a locally set application proxy for the target application server is determined based on the identification information of the target application server; and in a case of determining that there is the locally set application proxy for the target application server, the access request is responded to by means of the application proxy of the target application server.

In an exemplary embodiment, the operation that whether there is a locally set application proxy for the target application server is determined according to the identification information of the target application server may include that: an application information list storing identification information of multiple application servers is acquired, the multiple application servers being application servers each having a locally set application proxy, the locally set application proxy being configured to forward data of the corresponding application server and respond to the access request by using local cache data; and whether identification information matching the identification information of the target application server is present in the application information list is determined, wherein it is determined that there is the locally set application proxy for the target application server when the identification information matching the identification information of the target application server is present in the application information list.

In an exemplary embodiment, the identification information of the target application server may include at least one of a domain name, an Internet Protocol (IP) address, a port number, and a protocol type of the target application server; and the identification information of the plurality of application servers may include at least one of a domain name, an IP address, a port number, and a protocol type of each of the plurality of application servers.

In an exemplary embodiment, the operation that the access request is responded to by means of the application proxy of the target application server may include that: whether a user who initiates the access request needs to be authenticated is determined according to the target application server; in a case where the user does not need to be authenticated, the application proxy of the target application server is controlled to respond to the access request according to a preset manner; and in a case where the user who initiates the access request needs to be authenticated, an access authority of the user is acquired, and the application proxy of the target application server is controlled to respond to the access request according to a manner corresponding to the access authority.

In an exemplary embodiment, the operation that the application proxy of the target application server is controlled to respond to the access request according to a preset manner may include that: a transmission resource, a computing resource and a storage resource with a fixed value are allocated to the user; and the application proxy of the target application server is controlled to respond to the access request by using the allocated transmission resource, computing resource and storage resource.

In an exemplary embodiment, the operation that the access authority of the user is acquired may include that: the access authority of the user is acquired from an application information table or from the target application server, the access authority of the user including an access authority of the user to the target application server and/or an access authority of the user to a local network.

In an exemplary embodiment, the operation that the application proxy of the target application server is controlled to respond to the access request according to the manner corresponding to the access authority may include that: a transmission resource, a computing resource and a storage resource are allocated to the user according to the access authority of the user; and the application proxy of the target application server is controlled to respond to the access request by using the allocated transmission resource, computing resource and storage resource.

In an exemplary embodiment, after whether a user who initiates the access request needs to be authenticated is determined according to the target application server, the method may further include that: in a case where the user who initiates the access request needs to be authenticated, an authentication result of the user is saved to an application list, a storage time of the authentication result of the user being a preset value.

In an exemplary embodiment, after the access request is responded to by means of the application proxy of the target application server, the method may further include that: access information of a user who initiates the access request is collected; access habits of the user are determined by analyzing the access information of the user; and information matching the access habits of the user is cached.

According to another embodiment of the present disclosure, an apparatus for responding to an access request is also provided. The apparatus may include: a request acquisition unit, configured to acquire an access request for requesting access to a target application server, the access request carrying identification information of the target application server; a determination unit, configured to determine, based on the identification information of the target application server, whether there is a locally set application proxy for the target application server; and a response unit, configured to respond to, in a case where the determination unit determines that there is the locally set application proxy for the target application server, the access request by means of the application proxy of the target application server.

In an exemplary embodiment, the determination unit may include: an information acquisition module, configured to acquire an application information list storing identification information of a plurality of application servers, the plurality of application servers being application servers each having a locally set application proxy, the locally set application proxy being configured to forward data of the corresponding application server and respond to the access request by using local cache data; and a first determination module, configured to determine whether identification information matching the identification information of the target application server is present in the application information list, wherein it is determined that there is the locally set application proxy for the target application server when the identification information matching the identification information of the target application server is present in the application information list.

In an exemplary embodiment, the response unit may include: a second determination module, configured to determine, according to the target application server, whether a user who initiates the access request needs to be authenticated; a first response module, configured to control, in a case where the user does not need to be authenticated, the application proxy of the target application server to respond to the access request according to a preset manner; and a second response module, configured to acquire, in a case where the user who initiates the access request needs to be authenticated, an access authority of the user, and control the application proxy of the target application server to respond to the access request according to a manner corresponding to the access authority.

In an exemplary embodiment, the first response module may include: a first allocation sub-module, configured to allocate a transmission resource, a computing resource and a storage resource with a fixed value to the user; and a first response sub-module, configured to control the application proxy of the target application server to respond to the access request by using the allocated transmission resource, computing resource and storage resource.

In an exemplary embodiment, the second response module may include: an acquisition sub-module, configured to acquire the access authority of the user from an application information table or from the target application server, the access authority of the user including an access authority of the user to the target application server and/or an access authority of the user to a local network.

In an exemplary embodiment, the second response module may further include: a second allocation sub-module, configured to allocate a transmission resource, a computing resource and a storage resource to the user according to the access authority of the user; and a second response sub-module, configured to control the application proxy of the target application server to respond to the access request by using the allocated transmission resource, computing resource and storage resource.

In an exemplary embodiment, the apparatus may further include: a collection unit, configured to collect, after the response unit responds to the access request by means of the application proxy of the target application server, access information of a user who initiates the access request; an analysis unit, configured to determine access habits of the user by analyzing the access information of the user; and a cache unit, configured to cache information matching the access habits of the user.

According to another embodiment of the present disclosure, a base station is also provided. The base station may include any apparatus for responding to an access request as described above.

According to another embodiment of the present disclosure, a system for responding to an access request is also provided. The system may include: a terminal, a base station, a core network and a target application server, the base station being connected to the target application server through the core network, wherein when the terminal initiates, to the base station, an access request for requesting access to the target application server, the base station, in a case where there is a locally set application proxy for the target application server, responds to the access request by means of the application proxy of the target application server.

In an exemplary embodiment, the base station may determine, based on identification information of the target application server, whether there is a locally set application proxy for the target application server.

In an exemplary embodiment, after responding to the access request by means of the application proxy of the target application server, the base station may collect access information of a user who initiates the access request, determine access habits of the user by analyzing the access information of the user, and cache information matching the access habits of the user.

In an exemplary embodiment, the application proxy may be configured to forward data of the target application server and respond to the access request by using local cache data.

According to another embodiment of the present disclosure, a storage medium is provided. The storage medium may be configured to store program codes for performing the following operations: an access request for requesting access to a target application server is acquired, the access request carrying identification information of the target application server; whether there is a locally set application proxy for the target application server is determined based on the identification information of the target application server; and in a case of determining that there is the locally set application proxy for the target application server, the access request is responded to by means of the application proxy of the target application server.

In the embodiments of the present disclosure, an access request for requesting access to a target application server is acquired, the access request carrying identification information of the target application server; whether there is a locally set application proxy for the target application server is determined based on the identification information of the target application server; and in a case of determining that there is the locally set application proxy for the target application server, the access request is responded to by means of the application proxy of the target application server. That is, when a base station receives a request, an access request of a corresponding application proxy may be processed by the application proxy. Therefore, the technical problem in the related art of weak bearing capability of a base station is solved, thereby achieving the effect of improving the bearing capability of the base station.

### Brief Description of the Drawings

The accompanying drawings described herein are used to provide a deeper understanding of the present disclosure, and constitute a part of the present application, and the exemplary embodiments of the present disclosure and the description thereof are used to explain the present disclosure, but do not constitute improper limitations to the present disclosure. In the drawings:
FIG. 1 is a schematic diagram of an RAN system in the related art;
FIG. 2 is a schematic diagram of a computer terminal according to an embodiment of the present disclosure;
FIG. 3 is a flowchart of a method for responding to an access request according to an embodiment of the present disclosure;
FIG. 4 is a schematic diagram of an optional base station according to an embodiment of the present disclosure;
FIG. 5 is a schematic diagram of an optional RAN system according to an embodiment of the present disclosure;
FIG. 6 is a schematic diagram of an optional application list according to an embodiment of the present disclosure;
FIG. 7 is a schematic diagram of an apparatus for responding to an access request according to an embodiment of the present disclosure; and
FIG. 8 is a schematic diagram of a system for responding to an access request according to an embodiment of the present disclosure.

### Detailed Description of the Embodiments

The present disclosure will be described in detail below with reference to the drawings in conjunction with the embodiments. It is to be noted that embodiments in the present application and characteristics in the embodiments may be combined under the condition of no conflicts.

It is to be noted that the specification and claims of the present disclosure and the terms "first", "second" and the like in the drawings are used to distinguish similar objects, and do not need to describe a specific sequence or a precedence order.

### Embodiment 1

The method embodiment provided in Embodiment 1 of the present application may be executed in a mobile terminal, a computer terminal or a similar computing apparatus. Running on a mobile terminal is taken as an example. As shown in FIG. 2, the computer terminal may include one or more (only one computer terminal shown in the figure) processor 201 (the processor 201 may include, but is not limited to, a processing apparatus such as a Micro Control Unit (MCU) or a Field Programmable Gate Array (FPGA), a memory 203 configured to store data, and a transmission apparatus 205 configured as a communication function. It will be understood by those skilled in the art that the structure shown in FIG. 2 is merely illustrative and does not limit the structure of the above electronic device.

The memory 203 may be configured to store a software program and module of application software, such as a program instruction/module corresponding to a device control method in the embodiments of the present disclosure. The processor 201 executes various functional applications and data processing, that is, implements the above method by running the software program and module stored in the memory 203. The memory may include a high speed random access memory and may also include a non-volatile memory such as one or more magnetic storage apparatuses, a flash memory, or other non-volatile solid state memories. In some examples, the memory may further include memories remotely located relative to the processor, which may be connected to the computer terminal over a network. The examples of such networks include, but are not limited to, the Internet, the Intranet, local area networks, mobile communication networks, and combinations thereof.

The transmission apparatus is configured to receive or send data over a network. The above specific network examples may include a wireless network provided by a communication provider of the computer terminal. In one example, the transmission apparatus includes a Network Interface Controller (NIC) that can be connected to other network devices through the base station to communicate with the Internet. In one example, the transmission apparatus may be a Radio Frequency (RF) module for communicating with the Internet wirelessly.

The current RAN architecture is a closed, functionally customized, vertically integrated hardware system. The equipment provider provides a complete solution of hardware and software, does not provide external or external standard interfaces, and basically cannot introduce third-party applications and programs. The entire wireless network can only be a transmission pipeline. As shown in FIG. 1, an Application (APP) of a user terminal needs to access a server (i.e., APP Server) placed on the public Internet behind a core network, no matter how far or how close the user is from or to the APP server, it is suggested to go through an operation shown in S101 of FIG. 1, that is, through a pipeline from a base station (a base station type is NodeB or eNodeB) to a core network (i.e., the Internet), so as to acquire data from the application server. The load balancing adjustment of the APP server is performed at the remote end of the Internet. The pipeline does not support local offloading. In this way, the traffic of the remote APP server will become a bottleneck, affecting the bearer capability of the base station side.

In order to solve the problem of operator dumb pipeline, International Mobile Telecommunication for 2020 (IMT2020) (5G) promotes the definition of "5G Network Technology Architecture White Paper", a Mobile-Edge Computing (MEC) technology is to provide information technology service environment and cloud computing capabilities at a position close to mobile users, and to push content distribution to a user side (e.g., base station), so that applications, services and content are deployed in a highly distributed environment, which can better support low latency and high bandwidth service requirements in 5G networks. IMT2020 only defines some application scenarios and standard interfaces, but how to implement the solution and how to get a better user experience are not specified. In order to realize the idea proposed by IMT2020, the present application proposes the following implementation methods:
In accordance with an embodiment of the present disclosure, a method embodiment of a method for responding to an access request is provided. It is to be noted that the operations shown in the flowchart of the drawings may be executed in a computer system including, for example, a set of computer-executable instructions. Moreover, although a logic sequence is shown in the flowchart, the shown or described operations may be executed in a sequence different from the sequence here under certain conditions.

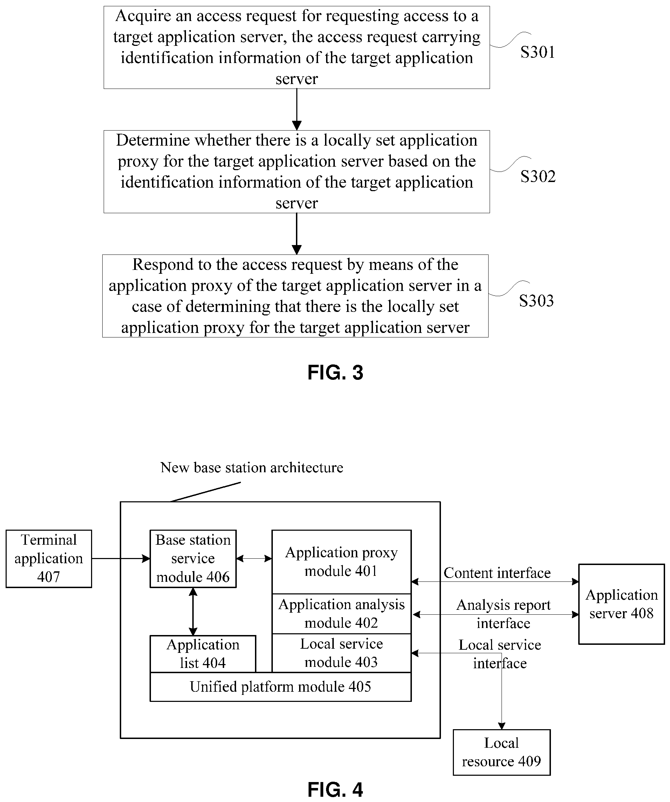

FIG. 3 is a flowchart of a method for responding to an access request according to an embodiment of the present disclosure. As shown in FIG. 3, the method includes the operations in blocks S301 to S303 as follows.

In block S301, an access request for requesting access to a target application server is acquired, the access request carrying identification information of the target application server.

In block S302, whether there is a locally set application proxy for the target application server is determined based on the identification information of the target application server.

In block S303, in a case of determining that there is the locally set application proxy for the target application server, the access request is responded to by means of the application proxy of the target application server.

By means of the above embodiment, an access request for requesting access to a target application server is acquired, the access request carrying identification information of the target application server; whether there is a locally set application proxy for the target application server is determined based on the identification information of the target application server; and in a case of determining that there is the locally set application proxy for the target application server, the access request is responded to by means of the application proxy of the target application server. That is, when a base station receives a request, an access request of a corresponding application proxy may be processed by the application proxy. Therefore, the technical problem in the related art of weak bearing capability of a base station is solved, thereby achieving the effect of improving the bearing capability of the base station.

In an exemplary embodiment, the execution body of the foregoing operations may be a base station, a wireless access point, or the like, but is not limited thereto. The embodiment of the present application is described in detail below by taking a base station as an example.

In order to implement the foregoing solution of the present application, as shown in FIG. 4, new base station architecture is provided. A third-party application proxy module (i.e., APP Proxy) 401, an application analysis module 402, a local service module 403, a local application list 404, a unified hardware and software platform 405, a base station service module 406 and other modules may be added to a conventional base station, and the functions of some base station communication modules are modified.

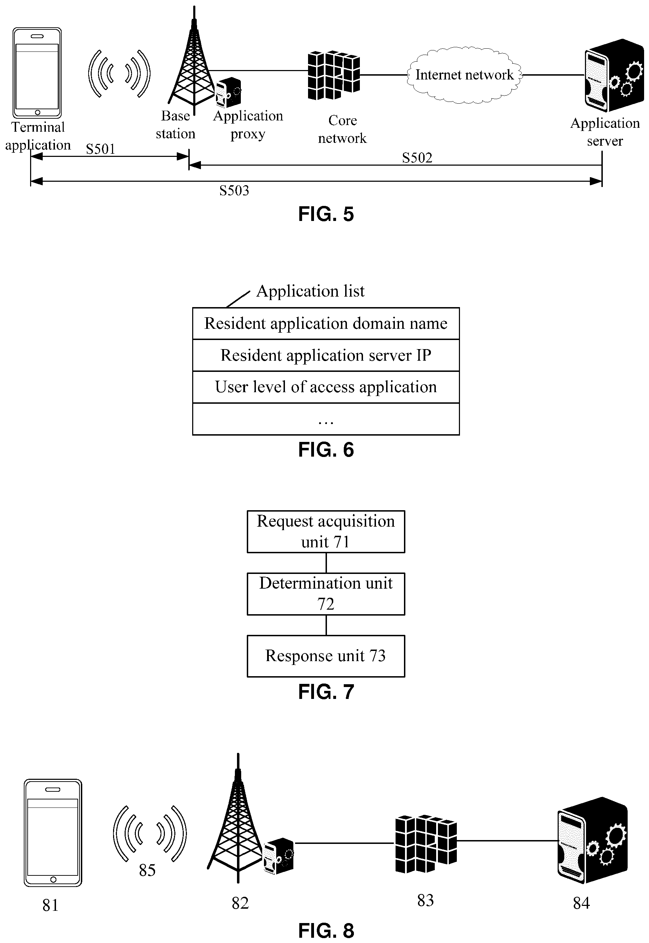

When the foregoing base station is applied to the system shown in FIG. 5, the terminal application may directly interact with the application proxy of the base station (i.e., the operation shown in S501 of FIG. 5) to perform data interaction, or may directly interact with the application server (i.e., the operation shown in S503 of FIG. 5) after passing the authentication (i.e., the operation shown in S502 of FIG. 5), including data request and data interaction. There is no need to forward through the core network or the Internet network. The base station is no longer only a simple data forwarding node, can sense a service type, sense a device type and sense a user type, and has a local storage capability and a data content optimizing capability, and operators can extract and utilize valuable information from a currently operational pipeline to effectively cope with ever-increasing data and signaling traffic. The function of each module is detailed below:
Third-party application proxy module: The third-party application proxy module acts as an APP server proxy, provides a partial service for a terminal application 407 of a user, can interact with a user APP, and can also interact with the APP server (i.e., application server 408), specifically interact through a content interface and an analysis report interface.
Application analysis module: The application analysis module may analyze the legality of user behaviors.
Local service module: The local service module may provide operations on a local resource 409 through a local service interface, such as offloading local data.
Local application list: An entry that includes a locally supported application type and application address mainly contains some user application information, such as a domain name of a resident application, a server IP of the resident application, and a user level of an access application.

The base station provides a unified software and hardware platform, which can be, but is not limited to, Network Function Virtualization (NFV) and Software Defined Network (SDN), which can simultaneously run base station services (i.e., functions provided by the base station service module) and third-party applications. Through the unified orchestration (i.e., orchestrator), some proxy functions of the third-party application reside on the base station. The proxy functions can communicate with the user application and the application server, and the base station provides a standard interface for use by the third-party application.

In addition to the above modules, the base station further includes a communication module, which can provide basic communication functions, and also provides some standard interfaces (e.g., a content interface, an analysis report interface and a local server interface).

It is to be noted that the third-party application standard interface includes interfaces for acquiring location information, access of a user to a destination address, user identifiers (e.g., International Mobile Subscriber Identification Number (IMSI), and International Mobile Equipment Identity (IMEI)), configuring the local IP of a user, and acquiring authentication.

For example, if a user enters a campus and accesses a local network, in a case where the user accesses the local network, a local application resident on a base station first needs to identify that the user is near the campus (location information), and has access to the local network (acquiring user authentication), the base station allocates a local IP to the user. When the user accesses the local network, the local IP is used to replace a public IP. The third-party application residing on the base station may legally analyze habits of the user according to information such as an IMSI or IMEI of the user.

The above base station may be configured to execute the above method of the present application. The operation that whether there is a locally set application proxy for the target application server is determined according to the identification information of the target application server may be implemented by the following manners: an application information list storing identification information of multiple application servers is acquired, the multiple application servers being application servers each having a locally set application proxy, the locally set application proxy being configured to forward data of the corresponding application server and respond to the access request by using local cache data; and whether identification information matching the identification information of the target application server is present in the application information list is determined, wherein it is determined that there is the locally set application proxy for the target application server when the identification information matching the identification information of the target application server is present in the application information list.

The identification information of the target application server includes at least one of a domain name, an IP address, a port number, and a protocol type of the target application server; and the identification information of the plurality of application servers may include at least one of a domain name, an IP address, a port number, and a protocol type of each of the plurality of application servers.

It is to be noted that the base station may dynamically generate an application list according to functions that can be provided by the resident third-party application. As shown in FIG. 6, the list may include information such as a domain name of the resident application, a server IP address of the resident application, and a user level of an access user.

When a user accesses an application service through a base station, a third-party application proxy acquires access information of the user through a standard interface provided by a base station communication module, and the base station matches a user data flow according to information of an application list. If the matching succeeds, the user is preferentially allowed to access a local base station application proxy. If the application list of the base station is not matched or the matching fails, the APP server on the Internet is directly accessed.

It needs to be explained in advance that an authentication result of the user may be saved to the application list, and a storage time of the authentication result of the user is a preset value (such as 10 minutes and 10 hours), so that when authentication is performed at next time, the authentication does not have to be done through a remote application server, and the authentication can be performed just by using the application list.

In the above embodiment, the operation that the access request is responded to by means of the application proxy of the target application server includes that: whether a user who initiates the access request needs to be authenticated is determined according to the target application server; in a case where the user does not need to be authenticated, the application proxy of the target application server is controlled to respond to the access request according to a preset manner; and in a case where the user who initiates the access request needs to be authenticated, an access authority of the user is acquired, and the application proxy of the target application server is controlled to respond to the access request according to a manner corresponding to the access authority.

The application that needs to be authenticated is fixed. Therefore, it is possible to determine whether authentication is needed according to the name of an application. When it is determined that authentication is not needed, that is, when it is not necessary to determine a service authority level, priority, etc. of the user, the operation that the application proxy of the target application server is controlled to respond to the access request according to a preset manner includes that: a transmission resource, a computing resource and a storage resource with a fixed value are allocated to the user, that is, the same resource is allocated to all users; and the application proxy of the target application server is controlled to respond to the access request by using the allocated transmission resource, computing resource and storage resource.

In an exemplary embodiment, the access authority acquired by the user during the previous access is saved in the application information table of the base station for a period of time. Therefore, when the access authority of the user is acquired, the access authority of the user may be acquired from the application information table, if there is no information in the application information table, the access authority of the user is acquired from the target application server.

The above access authority of the user includes an access authority to the target application server and/or an access authority to the local network, that is, when the user accesses an external network, the access authority of the target application server accessed by the user is authenticated. When the user accesses the local network, the authority of the user to the local network is authenticated, or the authority of a local target application server is authenticated, or both need to be authenticated.

In a case where the user who initiates the access request needs to be authenticated, it is suggested to determine the service authority level, priority, etc. of the user, so that a service matching the authority level of the user can be provided. The operation that the application proxy of the target application server is controlled to respond to the access request according to a manner corresponding to the access authority may be implemented by the following manners: a transmission resource, a computing resource and a storage resource are allocated to the user according to the access authority of the user; and the application proxy of the target application server is controlled to respond to the access request by using the allocated transmission resource, computing resource and storage resource.

In addition to the commonly used data forwarding function, the application proxy of the present application has the functions of data processing and analysis. That is, user habits are analyzed according to user preferences, and data information that satisfies user habits is cached.

With the above embodiment, if the application requires authentication, the application proxy residing on the base station acquires the service level of the user from the application server side or the application information list, and allocates resources to the user according to the service level, where the resource includes bandwidth or time slot resources of a wireless air interface, base station computing resources, base station storage resources, transmission resources, etc., so that the services of users with high service levels can be preferentially guaranteed.

In an optional embodiment, the third-party application proxy on the base station may legally collect access information of the user, and send the access information or an analysis result of the access information to the server through an interface. The application server pushes part of the information (i.e., information matching the access habit) to the base station application proxy according to the access information of the user, or the base station application proxy actively downloads part of the information from the application server and caches. That is, after the access request is responded to by the application proxy of the target application server, the access information of the user who initiates the access request (that is, the information requested by the access request of the user) may be collected; access habits of the user are determined by analyzing the access information of the user; and information matching the access habits of the user is cached, that is, the habits of the user are analyzed, information of the type of user access or the type of access time that reaches a certain preset value is selected, and then the type of information is pushed for the user. For example, users often watch basketball live broadcasts, so when there is a new basketball live broadcast, the new basketball live broadcast may be pre-pushed for the users; or if users like shopping, especially for certain types of electronic products, when there is a new update in this category of electronic products, the new update may be pushed for the users.

In the above embodiment, the third-party application can provide some operation interfaces for local resources, and the application proxy residing on the base station can provide some operation interfaces through which the user can pre-subscribe or cache partial information. When the third-party application discovers that the resource requested by the user is cached locally, the local resource can be directly accessed, and the user information is preferentially distributed to the local network. The operator may separately charge access of the local resource or charge a content provider residing on the base station and providing services.

When the method of the present application is implemented by using the above base station, the method can be implemented according to the operations as follows.

In operation S11, a third-party application resides part of APP Proxy functions on a base station, where the proxy functions can communicate with a user application and an application server, and the base station provides a standard interface for use by the third-party application.

In operation S12, the base station acquires functions that can be provided by the third-party application residing on the base station according to the unified arrangement of a service, and generates a corresponding query file according to a template, including information such as a domain name of an application, a server IP address, and a user service level.

In operation S13, when a user accesses the application server through the base station, the base station matches a local application list according to information such as a domain name of the application server accessed by the user, or a destination IP address. If the matching is successful, the user is allocated with a local IP address. If the matching is unsuccessful, a message is forwarded directly to a core network and transferred to the Internet.

In operation S14, if the application requires authentication, after the application server side authenticates, an application proxy residing on the base station acquires information such as a user service level from the application server. For users with high user service levels, better and more wireless air interface Resource Blocks (RB) are preferentially allocated, or more computing and storage resources are allocated on the base station, and more transmission bandwidth resources are allocated to guarantee the quality of service for users with high user service levels.

In operation S15, the third-party application proxy residing on the base station collects user access information legally, and sends the access information or an analysis result of the access information to the application server for processing through an interface. Based on the analysis result of the information, the application server actively pushes some information to the application proxy on the base station, or the application proxy on the base station actively downloads some information caches from the application server. The application proxy on the base station actively pushes this information to the user.

In operation S16, the third-party application can provide some operations for local resources, and the application proxy residing on the base station provides some operation interfaces, and the user actively subscribes or pre-caches partial information through an interface or by calling these interfaces, or provides some operations for local resources.

In operation S17, if the third-party application finds that the user can directly access some local resources, user data is preferentially offloaded to the local network without being forwarded through the core network.

In operation S18, an operator may separately charge access of the local resource or charge a content provider residing on the base station and providing services.

Embodiments of the present application are described in detail below in conjunction with specific implementations:

### Implementation 1

Users access a video website.

In operation S21, the video website may reside an application on a base station side and open a service cache on the base station side.

In operation S22, the base station generates, according to the resident application, an application list, including a domain name and service IP of the video application.

In operation S23, the user accesses the video website application, and the base station matches a destination domain name or IP address accessed by a user. If the matching is successful, the user preferentially accesses an application proxy of the base station side. In a case where the user does not access the service on the base station, the Internet is directly accessed.

In operation S24, a video application server authenticates the user, and the application proxy of the resident base station obtains the authority level of the user from an application server, and allocates different air interface resources, computing storage resources and transmission resources to the user according to the authority level.

In operation S25, the application proxy residing on the base station performs legal analysis on user habits, caches relevant videos, news and advertisements in a cache allocated by the base station in advance, and pushes them to the user.

In operation S26, the application residing on the video on the base station may also reserve some interfaces to the user, such as update information of some hot videos. If the information is updated, the priority content of the video application on the base station is cached from an Internet server to the local, and then notified to the user.

In operation S27, an operator may separately charge the accessed local resource or charge a content provider residing on the base station and providing services.

### Implementation 2

Users access a sports live application.

In operation S31, a sports live website has some functions of an application residing on a base station side, and opens a cache on the base station side.

In operation S32, the base station generates, according to the resident application, an application list, including a domain name and service IP of the video live application.

In operation S33, the user accesses the video live application, and the base station matches an access destination domain name or IP address of a user. If the matching is successful, the user is allowed to preferentially access an application proxy of the base station side. In a case where the user does not access the service on the base station or the matching is unsuccessful, the Internet is directly accessed.

In operation S34, a video live application server authenticates the user, and the application proxy of the resident base station obtains the authority level of the user from an application server, and allocates different air interface resources, computing storage resources and transmission resources to the user according to the authority level.

In operation S35, the live video application provides a camera viewing angle of various angles, provides an interface or a user interface to the user for selection, and avoids a single live broadcast picture. Because the transmission distance is shortened (directly transmitted by the base station locally, not through the core network), the delay is reduced, and a better service can be provided for users.

In operation S36, an operator may separately charge the local resource accessed by the user or charge a content provider residing on the base station and providing services.

### Implementation 3

Users view residential area monitor videos.

In operation S41, a residential area monitor has some functions of an application residing on a base station side, and opens a cache on the base station side.

In operation S42, the base station generates, according to the resident application, an application list, including a domain name and service IP of the monitor application.

In operation S43, the residential property may access the residential area monitor of an equipment room through a mobile phone application, and the base station matches an access destination domain name or IP address of a user. If the matching is successful, the user is allowed to preferentially access an application proxy of the base station side. In a case where the user does not access the service on the base station or the matching fails, a server on the Internet is directly accessed.

In operation S44, the residential property may perform access through the mobile phone application and access residential cameras after passing the authentication, the monitor application provides different interfaces and viewing angles, and the user can call cameras in different places to observe the monitoring image.

In operation S45, the residential area can directly use a normal terminal to pay attention to the residential area security in real time, without waiting in the equipment room all the time. Furthermore, since a large amount of data is directly transmitted back through the base station, the core network is avoided, the transmission bandwidth is not occupied, and the access delay is low.

In operation S46, an operator may separately charge the local resource accessed by the user or charge a content provider residing on the base station and providing services.

### Implementation 4

Users access a local area network.

In operation S51, parks such as a corporate park or campus make some functions of an application of some information websites reside on a base station side, and open a cache on the base station side.

In operation S52, the base station generates, according to the resident application, an application list, including a domain name and service IP of the Intranet of the park.

In operation S53, when the user accesses these information websites in the park, the base station matches a destination domain name or IP address accessed by a user. If the matching is successful, the user is allowed to preferentially access an application proxy of the base station side. In a case where the user does not access the service on the base station or the matching fails, a server on the Internet is directly accessed.

In operation S54, if the application proxy identifies that the user needs to access the Intranet service, the user is allocated with a temporary Intranet IP, and the internal access data is directly offloaded to a park network.

In operation S55, data of the park Intranet reaches the user, and is directly forwarded to the user by the base station, and all the data is processed locally without going through the core network.

In operation S56, an operator may separately charge the local resource accessed by the user or charge a content provider residing on the base station and providing services.

Through the foregoing embodiments, some applications are placed at the near end of a user (such as a base station side), which can greatly alleviate the load of the base station, and provide application scenarios and standard interfaces, thereby optimizing the local service of the base station, and enabling the user to obtain a better experience.

Through the description of the above implementation manners, those skilled in the art can clearly understand that the method according to the above embodiment may be implemented by means of software plus a necessary general hardware platform, and of course, may also be implemented through hardware, but in many cases, the former is a better implementation manner. Based on such understanding, the technical solution of the present disclosure, which is essential or contributes to the conventional art, may be embodied in the form of a software product stored in a storage medium (such as a Read-Only Memory (ROM)/Random Access Memory (RAM), a magnetic disk and an optical disc), including a number of instructions for causing a terminal device (which may be a mobile phone, a computer, a server, or a network device, etc.) to perform the methods described in various embodiments of the present disclosure.

### Embodiment 2

The embodiment of the present disclosure also provides an apparatus for responding to an access request. The apparatus is used to implement the above embodiments and preferred implementation manners, and those have not been described will not be elaborated. As used below, the term "module" may implement a combination of software and/or hardware of a predetermined function. Although the apparatus described in the following embodiments is preferably implemented in software, hardware, or a combination of software and hardware, is also possible and contemplated.

FIG. 7 is a schematic diagram of an apparatus for responding to an access request according to an embodiment of the present disclosure. As shown in FIG. 7, the apparatus may include: a request acquisition unit 71, a determination unit 72 and a response unit 73.

The request acquisition unit 71 is configured to acquire an access request for requesting access to a target application server, the access request carrying identification information of the target application server.

The determination unit 72 is configured to determine, based on the identification information of the target application server, whether there is a locally set application proxy for the target application server.

The response unit 73 is configured to respond to, in a case where the determination unit determines that there is the locally set application proxy for the target application server, the access request by means of the application proxy of the target application server.

By means of the above embodiment, the request acquisition unit acquires an access request for requesting access to a target application server, the access request carrying identification information of the target application server; the determination unit determines whether there is a locally set application proxy for the target application server based on the identification information of the target application server; and the response unit responds to, in a case where the determination unit determines that there is the locally set application proxy for the target application server, the access request by means of the application proxy of the target application server. That is, when a base station receives a request, an access request of a corresponding application proxy may be processed by the application proxy. Therefore, the technical problem in the related art of weak bearing capability of a base station is solved, thereby achieving the effect of improving the bearing capability of the base station.

In an exemplary embodiment, the above apparatus may be applied to a base station, a wireless access point, or the like, but is not limited thereto. The embodiment of the present application is described in detail below by taking a base station as an example.

The identification information of the target application server includes at least one of a domain name, an IP address, a port number, and a protocol type of the target application server; and the identification information of the plurality of application servers may include at least one of a domain name, an IP address, a port number, and a protocol type of each of the plurality of application servers.

In an exemplary embodiment, the determination unit may include: an information acquisition module, configured to acquire an application information list storing identification information of a plurality of application servers, the plurality of application servers being application servers each having a locally set application proxy, the locally set application proxy being configured to forward data of the corresponding application server and respond to the access request by using local cache data; and a first determination module, configured to determine whether identification information matching the identification information of the target application server is present in the application information list, wherein it is determined that there is the locally set application proxy for the target application server when the identification information matching the identification information of the target application server is present in the application information list.

In an exemplary embodiment, the response unit may further include: a second determination module, configured to determine, according to the target application server, whether a user who initiates the access request needs to be authenticated; a first response module, configured to control, in a case where the user does not need to be authenticated, the application proxy of the target application server to respond to the access request according to a preset manner; and a second response module, configured to acquire, in a case where the user who initiates the access request needs to be authenticated, an access authority of the user, and control the application proxy of the target application server to respond to the access request according to a manner corresponding to the access authority.

The above second determination module is further configured to save, in a case where the user who initiates the access request needs to be authenticated, an authentication result of the user to an application list, a storage time of the authentication result of the user being a preset value.

In an exemplary embodiment, the first response module includes: a first allocation sub-module, configured to allocate a transmission resource, a computing resource and a storage resource with a fixed value to the user; and a first response sub-module, configured to control the application proxy of the target application server to respond to the access request by using the allocated transmission resource, computing resource and storage resource.

In an exemplary embodiment, the second response module includes: an acquisition sub-module, configured to acquire the access authority of the user from an application information table or from the target application server, the access authority of the user including an access authority of the user to the target application server and/or an access authority of the user to a local network.

In an exemplary embodiment, the second response module further includes: a second allocation sub-module, configured to allocate a transmission resource, a computing resource and a storage resource to the user according to the access authority of the user; and a second response sub-module, configured to control the application proxy of the target application server to respond to the access request by using the allocated transmission resource, computing resource and storage resource.

In an optional embodiment, the apparatus may further include: a collection unit, configured to collect, after the response unit responds to the access request by means of the application proxy of the target application server, access information of a user who initiates the access request; an analysis unit, configured to determine access habits of the user by analyzing the access information of the user; and a cache unit, configured to cache information matching the access habits of the user.

With the above embodiment, if the application requires authentication, the application proxy residing on the base station acquires the service level of the user from the application server side or the application information list, and allocates resources to the user according to the service level, where the resource includes bandwidth or time slot resources of a wireless air interface, base station computing resources, base station storage resources, transmission resources, etc., so that the services of users with high service levels can be preferentially guaranteed.

It is to be noted that each of the above modules may be implemented by software or hardware. For the latter, it may be implemented by, but not limited to, the following manners that the above modules are all located in the same processor; or, the above modules are located in different processors in any combination form respectively.

### Embodiment 3

The embodiment of the present disclosure also provides a base station. The base station includes any apparatus for responding to an access request as described above.

A schematic diagram of the base station is shown in FIG. 4, various components and functions of the base station are detailed in Embodiment 1, and details are not described herein again.

### Embodiment 4

The embodiment of the present disclosure also provides a system for responding to an access request. As shown in FIG. 8, the system includes a terminal 81, a base station 82, a core network 83 and a target application server 84, the base station being connected to the target application server through the core network, wherein when the terminal initiates, to the base station, an access request for requesting access to the target application server, the base station, in a case where there is a locally set application proxy for the target application server, responds to the access request by means of the application proxy of the target application server.

The above terminal accesses the base station through a wireless fidelity 85, so as to perform network access through the base station.

In an exemplary embodiment, the base station determines, based on identification information of the target application server, whether there is a locally set application proxy for the target application server.

In an exemplary embodiment, after responding to the access request by means of the application proxy of the target application server, the base station collects access information of a user who initiates the access request, determines access habits of the user by analyzing the access information of the user, and caches information matching the access habits of the user.

In an exemplary embodiment, the base station caches information matching the access habits of the user through the core network.

The operation modes of the terminal, the base station, and the target application server in the system are described in detail in the foregoing embodiments, and details are not described herein again.

In an exemplary embodiment, the application proxy is configured to forward data of the target application server and respond to the access request by using local cache data.

By means of the response system, the base station acquires an access request for requesting access to a target application server, the access request carrying identification information of the target application server; whether there is a locally set application proxy for the target application server is determined based on the identification information of the target application server; and in a case of determining that there is the locally set application proxy for the target application server, the access request is responded to by means of the application proxy of the target application server. That is, when a base station receives a request, an access request of a corresponding application proxy may be processed by the application proxy. Therefore, the technical problem in the related art of weak bearing capability of a base station is solved, thereby achieving the effect of improving the bearing capability of the base station.

### Embodiment 5

The embodiment of the present disclosure also provides a storage medium. In the present embodiment, the storage medium may be configured to store a program code for performing the operations as follows.

In operation S1, an access request for requesting access to a target application server is acquired, the access request carrying identification information of the target application server.

In operation S2, whether there is a locally set application proxy for the target application server is determined based on the identification information of the target application server.

In operation S3, in a case of determining that there is the locally set application proxy for the target application server, the access request is responded to by means of the application proxy of the target application server.

In an exemplary embodiment, the storage medium is further configured to store a program code for performing the operations as follows.

At S4, an application information list storing identification information of multiple application servers is acquired, the multiple application servers being application servers each having a locally set application proxy.

At S5, whether identification information matching the identification information of the target application server is present in the application information list is determined.

In the present embodiment, the storage medium may include, but is not limited to, various media capable of storing a program code such as a U disk, a ROM, a RAM, a mobile hard disk, a magnetic disk or an optical disc.

In the present embodiment, the processor performs the following operations according to the program code already stored in the storage medium: acquiring an access request for requesting access to a target application server, the access request carrying identification information of the target application server; determining, according to the identification information of the target application server, whether there is a locally set application proxy for the target application server; and in a case of determining that there is the locally set application proxy for the target application server, the access request is responded to by means of the application proxy of the target application server.

In the present embodiment, the processor performs the following operations according to the program code already stored in the storage medium: acquiring an application information list storing identification information of multiple application servers, the multiple application servers being application servers each having a locally set application proxy; and determining whether identification information matching the identification information of the target application server is present in the application information list.

Specific examples in the present embodiment may refer to the examples described in the above embodiments and alternative implementation manners, and details are not described herein in the present embodiment.

It is apparent that a person skilled in the art shall understand that all of the above-mentioned modules or operations in the present disclosure may be implemented by using a general calculation device, may be centralized on a single calculation device or may be distributed on a network composed of multiple calculation devices. Optionally, they may be implemented by using executable program codes of the calculation devices. Thus, they may be stored in a storage device and executed by the calculation devices, the shown or described operations may be executed in a sequence different from this sequence under certain conditions, or they are manufactured into each integrated circuit module respectively, or multiple modules or operations therein are manufactured into a single integrated circuit module. Thus, the present disclosure is not limited to the combination of any specific hardware and software.

The above is only the preferred embodiments of the present disclosure, not intended to limit the present disclosure. As will occur to those skilled in the art, the present disclosure is susceptible to various modifications and changes. Any modifications, equivalent replacements, improvements and the like made within the spirit and principle of the present disclosure shall fall within the scope of protection of the present disclosure.

### Industrial applicability

During the process of responding to an access request, in the embodiments of the present disclosure, an access request for requesting access to a target application server is acquired, the access request carrying identification information of the target application server; whether there is a locally set application proxy for the target application server is determined based on the identification information of the target application server; and in a case of determining that there is the locally set application proxy for the target application server, the access request is responded to by means of the application proxy of the target application server. That is, when a base station receives a request, an access request of a corresponding application proxy may be processed by the application proxy. Therefore, the technical problem in the related art of weak bearing capability of a base station is solved, thereby achieving the effect of improving the bearing capability of the base station.

## Claims

1. A method for responding to an access request, comprising:
acquiring an access request for requesting access to a target application server, the access request carrying identification information of the target application server;
determining, based on the identification information of the target application server, whether there is a locally set application proxy for the target application server; and
in a case of determining that there is the locally set application proxy for the target application server, responding to the access request by means of the application proxy of the target application server.

2. The method as claimed in claim 1, wherein determining, based on the identification information of the target application server, whether there is the locally set application proxy for the target application server comprises:
acquiring an application information list storing identification information of a plurality of application servers, the plurality of application servers being application servers each having a locally set application proxy, the locally set application proxy being configured to forward data of the corresponding application server and respond to the access request by using local cache data; and
determining whether identification information matching the identification information of the target application server is present in the application information list, wherein it is determined that there is the locally set application proxy for the target application server when the identification information matching the identification information of the target application server is present in the application information list.

3. The method as claimed in claim 1 or 2, wherein the identification information of the target application server comprises at least one of a domain name, an Internet Protocol (IP) address, a port number, and a protocol type of the target application server; and the identification information of the plurality of application servers comprises at least one of a domain name, an IP address, a port number, and a protocol type of each of the plurality of application servers.

4. The method as claimed in claim 1, wherein responding to the access request by means of the application proxy of the target application server comprises:
determining, according to the target application server, whether a user who initiates the access request needs to be authenticated;
in a case where the user does not need to be authenticated, controlling the application proxy of the target application server to respond to the access request according to a preset manner; and
in a case where the user who initiates the access request needs to be authenticated, acquiring an access authority of the user, and controlling the application proxy of the target application server to respond to the access request according to a manner corresponding to the access authority.

5. The method as claimed in claim 4, wherein controlling the application proxy of the target application server to respond to the access request according to the preset manner comprises:
allocating a transmission resource, a computing resource and a storage resource with a fixed value to the user; and
controlling the application proxy of the target application server to respond to the access request by using the allocated transmission resource, computing resource and storage resource.

6. The method as claimed in claim 4, wherein acquiring the access authority of the user comprises:
acquiring the access authority of the user from an application information table or from the target application server, the access authority of the user comprising an access authority of the user to the target application server and/or an access authority of the user to a local network.

7. The method as claimed in claim 6, wherein controlling the application proxy of the target application server to respond to the access request according to the manner corresponding to the access authority comprises:
allocating a transmission resource, a computing resource and a storage resource to the user according to the access authority of the user; and
controlling the application proxy of the target application server to respond to the access request by using the allocated transmission resource, computing resource and storage resource.

8. The method as claimed in claim 4, wherein after determining, according to the target application server, whether the user who initiates the access request needs to be authenticated, the method further comprises:
saving, in a case where the user who initiates the access request needs to be authenticated, an authentication result of the user to an application list, a storage time of the authentication result of the user being a preset value.

9. The method as claimed in claim 1, wherein after responding to the access request by means of the application proxy of the target application server, the method further comprises:
collecting access information of a user who initiates the access request;
determining access habits of the user by analyzing the access information of the user; and
caching information matching the access habits of the user.

10. An apparatus for responding to an access request, comprising:
a request acquisition unit, configured to acquire an access request for requesting access to a target application server, the access request carrying identification information of the target application server;
a determination unit, configured to determine, based on the identification information of the target application server, whether there is a locally set application proxy for the target application server; and
a response unit, configured to respond to, in a case where the determination unit determines that there is the locally set application proxy for the target application server, the access request by means of the application proxy of the target application server.

11. The apparatus as claimed in claim 10, wherein the determination unit comprises:
an information acquisition module, configured to acquire an application information list storing identification information of a plurality of application servers, the plurality of application servers being application servers each having a locally set application proxy, the locally set application proxy being configured to forward data of the corresponding application server and respond to the access request by using local cache data; and
a first determination module, configured to determine whether identification information matching the identification information of the target application server is present in the application information list, wherein it is determined that there is the locally set application proxy for the target application server when the identification information matching the identification information of the target application server is present in the application information list.

12. The apparatus as claimed in claim 10, wherein the response unit comprises:
a second determination module, configured to determine, according to the target application server, whether a user who initiates the access request needs to be authenticated;
a first response module, configured to control, in a case where the user does not need to be authenticated, the application proxy of the target application server to respond to the access request according to a preset manner; and
a second response module, configured to acquire, in a case where the user who initiates the access request needs to be authenticated, an access authority of the user, and control the application proxy of the target application server to respond to the access request according to a manner corresponding to the access authority.

13. The apparatus as claimed in claim 12, wherein the first response module comprises:
a first allocation sub-module, configured to allocate a transmission resource, a computing resource and a storage resource with a fixed value to the user; and
a first response sub-module, configured to control the application proxy of the target application server to respond to the access request by using the allocated transmission resource, computing resource and storage resource.

14. The apparatus as claimed in claim 12, wherein the second response module comprises:
an acquisition sub-module, configured to acquire the access authority of the user from an application information table or from the target application server, the access authority of the user comprising an access authority of the user to the target application server and/or an access authority of the user to a local network.

15. The apparatus as claimed in claim 14, wherein the second response module further comprises:
a second allocation sub-module, configured to allocate a transmission resource, a computing resource and a storage resource to the user according to the access authority of the user; and
a second response sub-module, configured to control the application proxy of the target application server to respond to the access request by using the allocated transmission resource, computing resource and storage resource.

16. The apparatus as claimed in claim 10, further comprising:
a collection unit, configured to collect, after the response unit responds to the access request by means of the application proxy of the target application server, access information of a user who initiates the access request;
an analysis unit, configured to determine access habits of the user by analyzing the access information of the user; and
a cache unit, configured to cache information matching the access habits of the user.

17. A base station, comprising the apparatus for responding to an access request as claimed in any one of claims 10 to 16.

18. A system for responding to an access request, comprising a terminal, a base station, a core network and a target application server, the base station being connected to the target application server through the core network, wherein
when the terminal initiates, to the base station, an access request for requesting access to the target application server, the base station, in a case where there is a locally set application proxy for the target application server, responds to the access request by means of the application proxy of the target application server.

19. The system as claimed in claim 18, wherein the base station determines, based on identification information of the target application server, whether there is the locally set application proxy for the target application server.

20. The system as claimed in claim 18 or 19, wherein after responding to the access request by means of the application proxy of the target application server, the base station collects access information of a user who initiates the access request, determines access habits of the user by analyzing the access information of the user, and caches information matching the access habits of the user.

21. The system as claimed in claim 18, wherein the application proxy is configured to forward data of the target application server and respond to the access request by using local cache data.

22. A storage medium, comprising a stored program, wherein the program, when being run, is able to execute the method as claimed in any one of claims 1 to 9.
